# EUROPEAN PATENT APPLICATION

(11) **EP 4 477 622 A1**
(43) Date of publication of application: **18.12.2024**
(21) Application number: 23179508.9
(22) Date of filing: 15.06.2023
(51) Int. Cl.: C01C 1/04, C07C 29/152

(54) **CONTROL OF AMMONIA OR METHANOL SYNTHESIS LOOP AT PARTIAL LOAD**

(71) Applicant: CASALE SA, 6900 Lugano (CH)
(72) Inventor: PANZA, Sergio, 22100 Como (IT); PIN, Mattia, 22100 Como (IT); CARRARA, Davide, 22073 Fino Mornasco (CO) (IT); GENOVA, Giovanni, 22100 Como (IT); CORBETTA, Michele, 22100 Como (IT)
(74) Representative: M. Zardi & Co S.A.

(57) **Abstract**

A method for controlling an ammonia synthesis loop (101) or a methanol synthesis loop at partial load, wherein the loop includes a converter (1), a circulation compressor (4); a main feed line (20) and a main feed valve (5) of the converter, the method includes controlling the opening of said main feed valve (5) by a differential pressure controller (DPC) responsive to the pressure difference across said main feed valve.

## Description

### Field of application

The invention relates to the field of industrial synthesis of ammonia and industrial synthesis of methanol. The invention pertains to a method for controlling a synthesis loop at partial load.

### Prior art

The industrial production of ammonia includes the generation of a make-up gas (MUG) in the front-end and the conversion of said makeup gas in a so-called ammonia synthesis loop. Similarly, the production of methanol includes the generation of a suitable make-up gas and the conversion in a synthesis loop.

The synthesis loop includes a catalytic converter wherein the makeup gas is reacted under appropriate temperature and pressure. The effluent of the converter typically contains unconverted reagents which are separated and recycled to the converter thus forming the synthesis loop.

The synthesis loop operates at a pressure which is typically much higher than the pressure of the makeup gas generated in the front-end. A main compressor elevates the pressure of the make-up gas to feed the loop. A circulator stage compressor maintains circulation in the loop and compensates for the pressure losses in the piping of the loop. The circulator can be a stand-alone machine or in some cases the circulator and the main compressor are mounted on the same shaft.

Both the synthesis of ammonia and synthesis of methanol rely basically on the production of hydrogen. The ammonia make-up gas is essentially a mixture of hydrogen and nitrogen in a suitable proportion, wherein nitrogen may be added with combustion air in a secondary reformer or separately when available, e.g. from an air separation unit. In methanol synthesis, the make-up gas is essentially a mixture of hydrogen and carbon monoxide.

When the hydrogen for the make-up gas comes from a fossil source (reforming of hydrocarbons, such as natural gas, or gasification of coal), the production of hydrogen is nearly constant and the synthesis loop can generally be operated steadily at or near 100% of the nominal capacity (also termed plant capacity). Therefore, in conventional fossil fuel-based facility the flexibility of the loop, that is the ability to operate at partial load, is generally not an issue.

Recently, a great interest emerged about applications wherein at least part of the hydrogen is sourced from renewable energy such as solar or wind. A particularly interesting application is the production of hydrogen via water electrolysis powered by wind turbines or solar cells. Accordingly, the feed of the hydrogencontaining make up gas fluctuates following the availability of the renewable energy (sunlight and/or wind).

A hydrogen storage may compensate, at least temporarily, for the lack of renewable energy, but storage is expensive. There is therefore the need to develop new methods to control the synthesis loop, in order to cope with the fluctuations of the hydrogen feed. In practice, this requires the ability to operate the ammonia plant or the methanol plant at a partial load significantly less than 100%, such as less than 50% or even less than 20%, for example at 10% of the nominal load.

A problem encountered when trying to operate the synthesis loop at a low load is that the operation of the circulation compressor may become unstable. Additionally, the pressure in the converter should be kept sufficiently high to maintain the conversion reaction and allow the converter to rapidly return at full load when the hydrogen feed is restored. A further problem connected with operation at variable load is that cyclic variation of the operating parameters of the synthesis loop such as the loop operating pressure or temperature may induce fatigue stress of the equipment.

A shut-down of the converter is not desired because it requires time to restart and may cause fatigue stress. At a low load, the reaction may not produce a sufficient heat to maintain operation of the converter. The converter is normally equipped with a start-up heater which, at least theoretically, might be used in such case to provide additional heat; this solution however requires additional energy which may not be available or may be expensive, and for this reason is not attractive.

The circulator stage compressor is normally equipped with internal controls adapted to avoid mechanical damage possibly caused by operation at a low or very low load. For example, a centrifugal compressor is normally equipped with an anti-surge valve. Said valve however is designed to intervene in limited cases to protect the machine and there is the need of a more accurate control which takes into account not only the operation of the compressor as such but also the operation of the entire loop.

In summary, operating an ammonia synthesis loop or a methanol synthesis loop at partial load is challenging. Solutions for controlling the loop at partial load have been proposed in EP 3 819 261 and WO 2021 233 780 but there is still the need to improve the state of the art.

### Summary of the invention

The invention aims to provide a method of controlling an ammonia synthesis loop or a methanol synthesis loop in a broad range of operating loads. The invention addresses the problem of how to control the synthesis loop in order to maintain stable operation of the circulation compressor and sufficient pressure of the ammonia or methanol converter, when the hydrogen feed is significantly less than the nominal value.

The problem is solved with a method according to the claims. In the invention, the synthesis loop includes a differential pressure controller responsive to a differential pressure in the converter feed line between a point upstream a main feed valve and a point downstream said main feed valve. Said controller governs the opening of said converter main feed valve based on a setpoint of the differential pressure. The setpoint may be independent from the instant load of the loop or may be dynamically varied according to the load of the loop. In some embodiments, said setpoint is provided by a pressure controller of the loop.

The pressure drop across the main feed valve of the converter may be maintained constant or within a desired range. The method of the invention may include, in addition, controlling the degree of opening of one or more other valves of the loop. Said one or more valves may be controlled by one or more pressure controllers.

The method of the invention goes beyond the conventional technique of controlling the loop by means of a loop pressure controller. The applicant has found that using said difference of pressure as a variable to control the loop delivers a stable operation of the loop even at low loads, allowing the loop to reach 20% or 10% of the nominal load without instability of the compressor and maintaining an acceptable pressure of the loop.

### Description of the invention

The invention is now described in a greater detail. The invention concerns a method for controlling an ammonia synthesis loop or a methanol synthesis loop at partial load in a process for synthesis of ammonia.

The synthesis loop receives a fresh make-up gas produced in a suitable front-end. In a preferred embodiment, at least part of the energy required for the production of the make-up gas comes from a renewable source, to reduce the carbon footprint of the process. The term renewable source, according to the common definition, denotes any source which is naturally replenished, including biomass. In a highly preferred embodiment, some or all of the hydrogen in the make-up gas is produced by solar-powered or wind-powered water electrolysis.

The synthesis loop has a full load condition corresponding to a nominal input of fresh make-up gas. A partial load is a condition wherein the loop operates with an input of fresh makeup gas less than said nominal input. The load of the synthesis loop may be denoted by the amount of make-up gas converted to ammonia or methanol.

The synthesis loop includes a converter wherein a feed gas is reacted; a circulation compressor configured to maintain circulation in the synthesis loop; a line arranged to feed said converter and including a main feed valve. The circulator compressor can be of any type, such as reciprocating or centrifugal.

The feed gas reacted in the converter includes the fresh make-up gas and a recirculated portion of unreacted gas.

The synthesis loop further includes a differential pressure controller responsive to a differential pressure in the converter feed line between a point upstream said main feed valve and a point downstream said main valve, and arranged to control the opening of said main valve based on said differential pressure.

The method of controlling the loop at partial load includes the steps of providing a setpoint to said differential pressure controller so that the opening of the main feed valve of the converter is controlled according to said setpoint.

The setpoint to the differential pressure controller may be a static setpoint or a dynamic setpoint in relation to the load of the synthesis loop. A static setpoint does not depend on the load whereas a dynamic setpoint is continuously adjusted according to the instant load of the loop. The load of the loop may be represented by the fresh make up gas sent to the loop, or by the plant production.

In some embodiments, the set point to the differential pressure controller is provided by another controller arranged in cascade. Said another controller is preferably a pressure controller at a selected location to detect the pressure in the loop. In addition to providing the setpoint to the differential pressure controller, said pressure controller may control one or more other valves of the loop.

Said pressure controller is preferably arranged to detect the pressure in the main feed line between the delivery side of the circulator and the main feed valve.

In an embodiment, the method includes the step of adjusting the setpoint to said differential pressure controller in response to a variation of the pressure of the loop, detected by said pressure controller, which is greater than a selected threshold. Said threshold may be a variation of 5%, 10%, 15% according to certain embodiments.

In preferred embodiments, the synthesis loop is additionally controlled by varying the opening of one or more additional valves of the loop. Preferably said one or more valves are governed by one or more pressure controllers.

In some embodiments, the invention makes use of a split-range technique. Accordingly, a signal provided by a controller can be split to control two or more valves of the loop. A split-range control may be applied to a pressure controller or to the differential pressure controller of the main feed valve.

The pressure controller or each pressure controller has a setpoint which correspond to a target pressure to be maintained in the loop at partial load. Said setpoint may be fixed or variable.

In preferred embodiments, the loop is controlled by the combined action of said main valve and at least another valve of the loop. Preferred embodiments include that the loop is additionally controlled by one or more of the following valves: a converter bypass valve; a compressor admission valve located at the suction side of the circulation compressor; a converter feed secondary valve in parallel to said converter feed main valve.

A converter bypass valve is understood as a valve on a converter bypass line connecting a point in the loop downstream of said circulator to a point in the loop upstream of said circulator and arranged so that a portion of the feed gas delivered by the circulator can be sent back to the suction of the circulator, travelling through said converter bypass line and without passing through the converter. Said bypass valve is preferably in addition to an anti-surge valve (or kick-back valve) of the circulation compressor. In some embodiment, an anti-surge valve or kick-back valve of the circulation compressor is used as bypass valve.

A circulation compressor admission valve is a valve located at the suction side of said compressor. By varying the opening of said valve, the circulator inlet pressure varies. As a consequence, the circulator operates accordingly to its type (centrifugal or reciprocating) and characteristic curves.

A converter feed secondary valve is a valve on a secondary feed line in parallel to the main feed line of the converter. The secondary line and the related secondary valve are generally smaller than the main line / main valve.

In interesting embodiments of the invention, one or more of said converter bypass valve, compressor admission valve and converter feed secondary valve is governed by a pressure controller responsive to the pressure in the loop. The method of controlling the pressure in the loop at partial load may include the provision of a setpoint to said pressure controller to control the opening of said valve(s). In an interesting embodiment, a pressure controller is used to provide the setpoint to the differential pressure controller of the main valve of the converter and to control the opening of at least one other valve of the loop. Preferably said other valve is one of the above-mentioned converter bypass valve, compressor admission valve or secondary feed valve of the converter.

When installed, the secondary feed valve is preferably governed by the differential pressure controller of the main valve, according to a split-range control. In an embodiment, a pressure controller installed in the loop feeds a setpoint to a differential pressure controller and the output of said differential pressure controller governs the main valve and the secondary valve in a split-range. A split range control for said main valve and secondary valve is preferably a complementary split-range control.

In the various embodiments of the invention, a pressure controller is preferably located on a line connecting the delivery of the circulation compressor to the inlet of the converter. The same pressure controller or different pressure controllers may be arranged to control the converter by-pass valve and/or the compressor admission valve and/or the converter main feed valve.

In an interesting embodiment, a pressure controller governs the converter bypass valve and provides the setpoint to the differential pressure controller of the converter main feed valve. In a variant of this embodiment, the differential pressure controller controls the main feed valve and secondary feed valve of the converter in a split-range.

In the invention, the setpoint of a control variable, such as the pressure in the synthesis loop or the pressure drop across the main feed valve, can represented by a range, wherein the variable is controlled to remain within the range. In some embodiments, the set point to the differential pressure controller of the converter main feed valve is given as a range ΔPₙₒₘ ± p* wherein ΔPₙₒₘ is the pressure drop across said main valve at full load of the loop and p* is a selected deviation from said pressure drop.

Preferably, the above range ΔPₙₒₘ is 1.0 bar to 20.0 bar, preferably 1.0 to 10.0 bar and more preferably 1.0 to 5.0 bar. Said deviation p* is preferably not greater than 0.30 bar or not greater than 0.20 bar, for example 0.01 to 0.20 bar or 0.01 to 0.30 bar.

In preferred embodiments of the invention, the synthesis loop reaches a partial load of less than 50% of the nominal load, preferably less than 20%, more preferably until around 10% and further more preferably about 5%.

Another aspect of the invention is a synthesis section according to the claims, including a synthesis loop and a control system configured to operate with the method of the invention.

The method of the invention enables effective control of the synthesis loop in a broad range of load conditions. The method of the invention keeps the circulation compressor from operating under unstable conditions. The invention avoids the shutdown of the converter at reduced loads and avoids the need for using the start-up heater of the converter at low capacity.

### Description of the figures

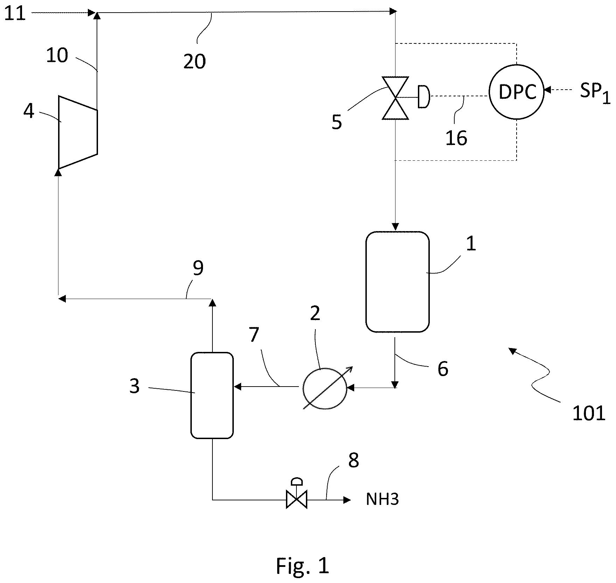

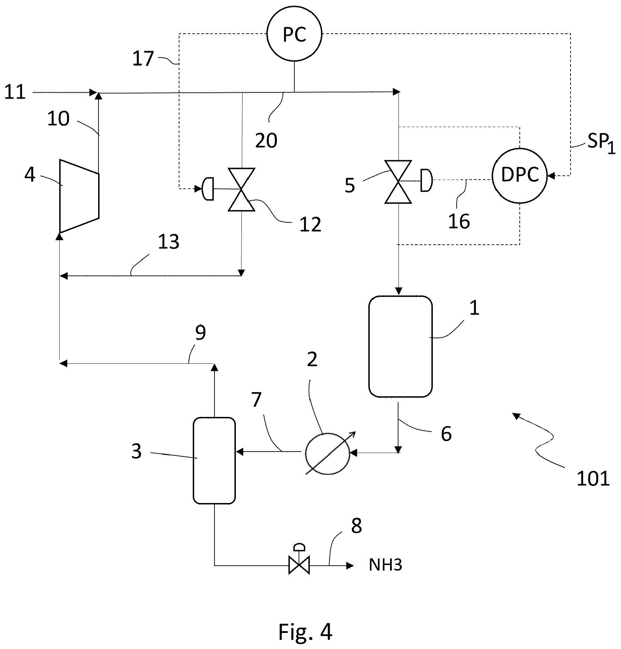

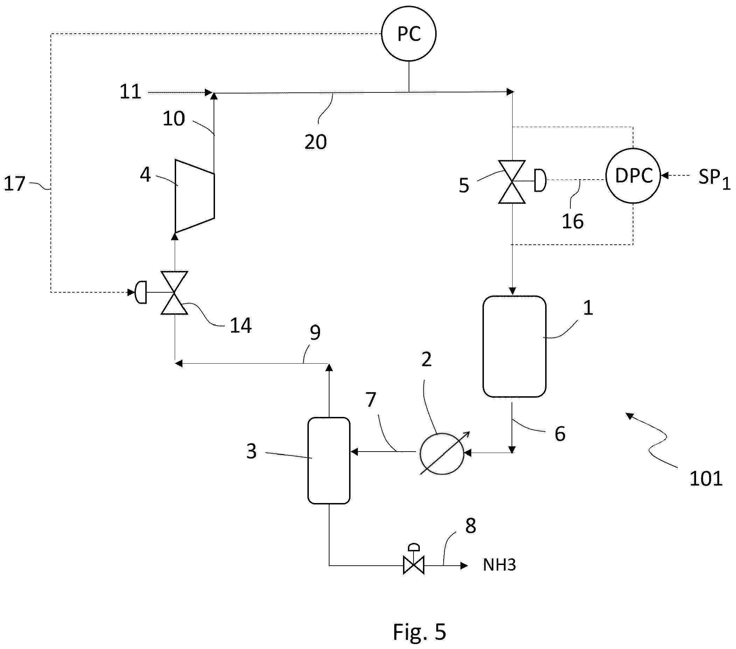

Figs. 1 to 6 are schematic diagrams of a synthesis loop for the preparation of ammonia or methanol and will be used to illustrate some embodiments of the method of the present invention.

In Fig. 1, a synthesis loop 101 has the following main components:
- 1: Converter
- 2: Cooler/condenser of the converter effluent
- 3: Separator
- 4: Circulation compressor
- 5: Main feed valve of the converter ("main valve")

Additionally, Fig. 1 illustrates the following connection lines or process streams:
- 6: Hot gas effluent from the converter 1
- 7: Cooled effluent
- 8: Liquid product containing ammonia or methanol
- 9: Unreacted gas recycled to the converter 1
- 10: Discharge line of the compressor 4
- 11: Input line of fresh make-up gas
- 20: Main feed line

The liquid product, which contains ammonia or methanol, is withdrawn at line 8. The liquid level in the separator 3 is controlled by a suitable level controller, governing the valve of line 8. The fresh make-up gas entering at line 11 is provided by a front-end and is elevated to synthesis pressure by a suitable make-up gas compressor (not shown).

Preferably the fresh make-up gas 11 is introduced at the discharge side of the compressor 4, as shown, although this is not a requisite and the fresh gas may also enter at a different location, e.g. at the suction side of the compressor.

Figs. 1 to 6 are simplified and show the items necessary for the understanding of the embodiments of the invention. Items not shown may include, for example, a gas-gas heat exchanger between the compressor 4 and the main valve 5 and a gas-gas heat exchanger between the separator 3 and compressor 4.

The item DPC denotes a differential pressure controller arranged to respond to a difference of pressure in the feed line 20 between a point upstream the main valve 5 and a point downstream said main valve 5. Preferably the points of connection of the differential pressure controller are next to the valve 5 without other items in between. Accordingly, the difference of pressure detected by said controller DPC is substantially the pressure drop across the main valve 5.

The dotted line 16 denotes the output signal of said controller DPC which governs the opening of the main valve 5. Said controller DPC receives a set point SP1 which can be constant or dependent on the current load of the loop according to different embodiments.

In some embodiments, the set point SP1 depends on one or more of the following: the amount of the fresh make up gas to the loop; the plant production; a variation of the loop operating pressure. In the latter case, the system can be configured to take action to avoid a significant change of the loop operating pressure.

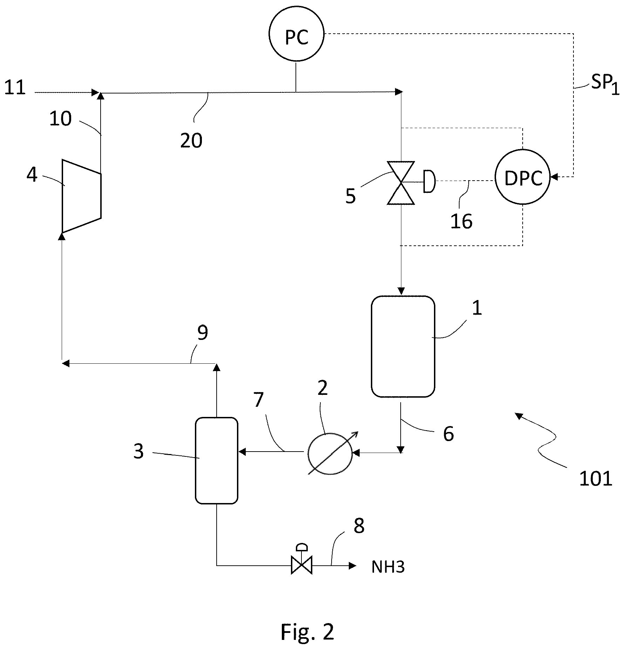

Fig. 2 illustrates an embodiment where the setpoint SP1 of the controller DPC is given by a pressure controller PC responsive to the pressure in the feed line 20. Accordingly, the setpoint SP1 varies in accordance with the instant pressure of the loop 101.

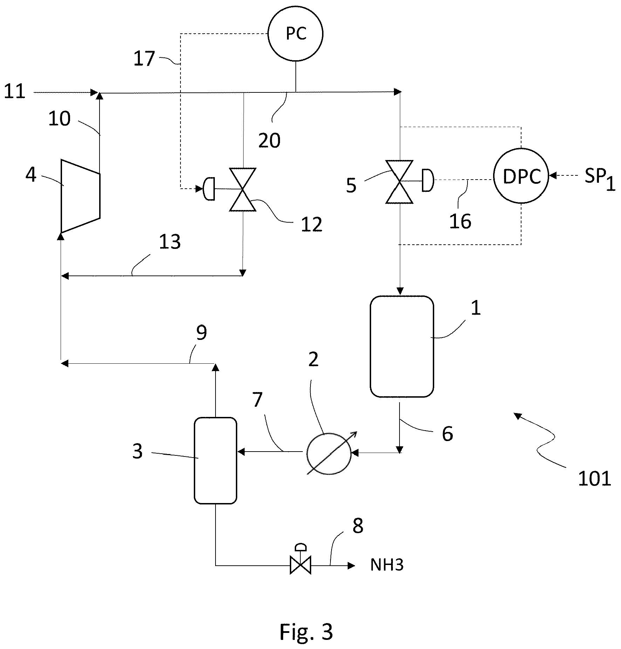

Fig. 3 illustrates an embodiment wherein the loop 101 includes a converter bypass line 13 and bypass valve 12. Said bypass line 13 connects a point downstream of said circulator 4 to a point upstream of said circulator 4 so that, according to opening of the bypass valve 12, a portion of the feed gas delivered by the circulator can be sent back to the suction of the circulator without passing through the converter 1.

The compressor 4 is normally equipped with an anti-surge valve (or kick-back valve) which is not illustrated. The anti-surge valve is closed during normal operation and opens in exceptional cases to protect the compressor from potential damage. Fig. 3 relates to an embodiment wherein the bypass valve 12 is in addition to such anti-surge valve and is controlled to maintain the pressure in the loop in a desired range or nearly constant when the loop operates at partial load.

The bypass valve 12 in Fig. 3 is controlled by the pressure controller PC depending on the pressure in the main line 20. The line 17 denotes the output signal of the pressure controller PC.

In a variant embodiment, the function of the valve 12 is performed by the anti-surge valve or kick-back valve of the compressor 4.

Fig. 4 illustrates an embodiment where the pressure controller PC controls directly the converter bypass valve 12 and provides the setpoint SP1 to the differential pressure controller DPC.

Fig. 5 illustrates an embodiment where the pressure controller PC controls a compressor admission valve 14, located at the suction side of the compressor 4. In a variant of this embodiment, the pressure controller PC may also provide the setpoint SP1 similarly to Fig. 4.

Fig. 6 illustrates an embodiment wherein the loop includes a secondary feed line in parallel to the main line 20. Said secondary feed line has a secondary feed valve 15 parallel to the main valve 5. The flow rate in the secondary line is regulated by said secondary valve 15. Said second feed line is preferably smaller than the main line in terms of flow rate.

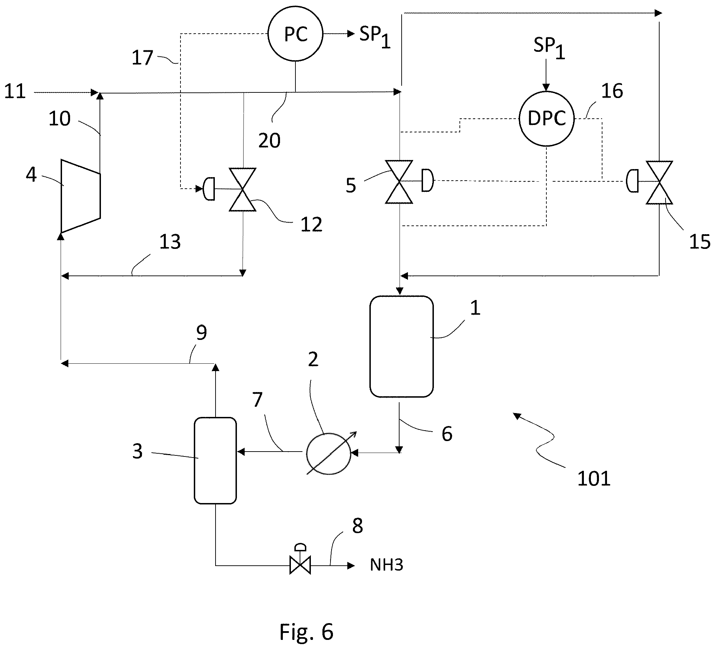

In the embodiment of Fig. 6, the loop is controlled by acting on the main valve 5, the converter bypass valve 12 and the secondary valve 15. Preferably, the pressure controller PC governs the bypass valve 12 (output signal 17) and sends a setpoint SP1 to the controller DPC. The controller DPC governs the main valve 5 and the secondary valve 15 according to a split-range technique. The output 16 of the controller DPC determines the opening of the main valve 5 and secondary valve 15. In a variant, the controller DPC may have a fixed setpoint.

## Claims

1. A method for controlling an ammonia synthesis loop (101) or a methanol synthesis loop running at partial load wherein:
a fresh make-up gas (11) is fed to said synthesis loop;
the synthesis loop has a full load condition corresponding to a nominal input of fresh make-up gas, and a partial load is a condition wherein the loop operates with an input of fresh makeup gas less than said nominal input;
said synthesis loop includes: a converter (1) wherein a feed gas is reacted; a circulation compressor (4) configured to maintain circulation in the synthesis loop; a feed line (20) arranged to feed said converter (1) and including a main feed valve (5);
the synthesis loop further includes a differential pressure controller (DPC) responsive to a differential pressure in said feed line (20) between a point upstream said main feed valve (5) and a point downstream said main feed valve, said controller being arranged to control the opening of said main feed valve;
wherein controlling the loop at partial load includes the steps of providing a setpoint (SP1) to said differential pressure controller (DPC) so that the opening of said main feed valve (5) is controlled according to said setpoint.

2. A method according to claim 1 wherein the synthesis loop includes at least one pressure controller (PC) which is responsive to the pressure in the loop and said pressure controller is arranged to control the opening of at least another valve in the loop, and the method includes providing a setpoint to said pressure controller in order to control the opening of said at least another valve.

3. A method according to claim 1 or 2 wherein the synthesis loop includes at least one pressure controller (PC) which provides the setpoint (SP1) to said differential pressure controller (DPC).

4. A method according to claim 3 including the step of adjusting the setpoint to said differential pressure controller in response to a variation of the pressure of the loop, detected by said pressure controller, which is greater than an adjustment threshold, said adjustment threshold being preferably a variation of 10%.

5. A method according to any of the previous claims wherein:
the synthesis loop includes a converter bypass line (13) connecting a point in the loop downstream of said circulation compressor (4) to a point in the loop upstream of said compressor (4) and arranged so that a portion of the gas delivered by said compressor can be sent back to the suction of the compressor (4), travelling through said converter bypass line and without passing through the converter (1), said converter bypass line (13) including a converter bypass valve (12);
the synthesis loop further includes a pressure controller (PC) which is responsive to the pressure in the loop and is arranged to control the opening of said converter bypass valve (12);
controlling the pressure in the loop at partial load includes the steps of: providing a setpoint to said pressure controller to control the opening of said converter bypass valve.

6. A method according to any of the previous claims wherein:
the synthesis loop includes a circulation compressor admission valve (14) located at the suction side of said compressor (4), and further includes a pressure controller (PC) which is responsive to the pressure in the loop and is arranged to control the opening of said compressor admission valve (14);
controlling the pressure in the loop at partial load includes the steps of: providing a setpoint to said pressure controller to control the opening of said compressor admission valve.

7. A method according to any of the previous claims wherein:
the synthesis loop includes a converter secondary feed valve (15), which is arranged in parallel to said converter main feed valve (5) and further includes a pressure controller (PC) which is responsive to the pressure in the loop and is arranged to control the opening of said secondary feed valve;
controlling the pressure in the loop at partial load includes the steps of: providing a setpoint to said pressure controller to control the opening of said secondary feed valve.

8. A method according to any of claims 2 to 7, wherein said pressure controller (PC) is responsive to the pressure in a line connecting the delivery of said circulation compressor to the inlet of the converter.

9. A method according to any of the previous claims wherein the same pressure controller or different pressure controllers are arranged to control the converter by-pass valve and/or to control the compressor admission valve and/or to control the secondary feed valve and/or to provide the setpoint (SP1) to the differential pressure controller (DPC).

10. A method according to any of the previous claims wherein a pressure controller (PC) controls at least one of the converter by-pass valve (12), the compressor admission valve (14) and the secondary feed valve (15), and said pressure controller (PC) provides the setpoint of said differential pressure controller (DPC).

11. A method according to any of the previous claims wherein the set point to the differential pressure controller is given as a range ΔPₙₒₘ ± p* wherein ΔPₙₒₘ is the pressure drop across said main converter feed valve (16) at full load of the loop and p* is a selected deviation from said pressure drop.

12. A method according to claim 11 wherein ΔPₙₒₘ is 1.0 bar to 20.0 bar, preferably 1.0 to 10.0 or 1.0 to 5.0 bar.

13. A method according to claim 11 or 12 wherein said deviation is not greater than 0.20 bar, such as 0.01 to 0.20 bar.

14. A synthesis section for the synthesis of ammonia or methanol, including a fresh make-up gas input, a converter, a separator where the effluent of the converter is separated into a liquid product and unreacted gas, a line arranged to reintroduce the unreacted gas into the converter, together with the fresh make-up gas, to form a synthesis loop, a circulation compressor adapted to maintain circulation within the loop and to feed the converter, said synthesis section further including a control system configured to control the loop in accordance with the method of any of claims 1 to 13.

15. A synthesis section according to claim 14 where the fresh make up gas input is arranged to feed the fresh make-up gas directly to the discharge side of said circulation compressor.
